# EUROPEAN PATENT SPECIFICATION

(11) **EP 0 411 809 B1**
(45) Date of publication and mention of the grant of the patent: **29.09.1993**
(21) Application number: 90308103.2
(22) Date of filing: 24.07.1990
(51) Int. Cl.: B60R 22/26

(54) **Vehicle seat belt mounting**
Sicherheitsgurteinbau für ein Fahrzeug
Montage d'une ceinture de sécurité pour véhicule

(30) Priority: 02.08.1989 GB 8917632
(43) Date of publication of application: 06.02.1991
(73) Proprietor: Dunlop Cox Ltd, Nottingham NG8 4GP (GB)
(72) Inventor: Babbs, Frederick William, Radcliffe-on-Trent, Nottingham (GB)
(74) Representative: Treves, Barry William

(56) References cited:
- EP-A- 0 041 859
- EP-A- 0 078 945

## Description

The present invention relates to vehicle seat belts and particularly the mountings for such seat belts and relates also to vehicle seat assemblies of the type which include one mounting for a seat belt. The invention relates also to vehicles including such a seat belt mounting and is applicable in particular to two-door cars.

Conventionally, a vehicle seat belt has three mounting points, one inboard mounting, which is typically secured to the vehicle floor between the front seats, and two outboard mountings which are vertically spaced from one another and secured to the vertical pillar defining the rear edge of the doorway to which the user's seat is adjacent. The problem with this construction is that the seat is generally adjustable in the fore and aft direction in order to be able to take account of personal preference and varying height of the user and only in one specific position of the seat does the seat belt pass obliquely across the user's body at the optimum angle as regards comfort and reliability of restraint.

This problem can be largely overcome by positioning the lower outboard mounting point on the frame of the seat or some item which moves with it, typically the movable slide member of the slide mechanism which slidably secures the seat to the vehicle floor. This ensures that the angle at which the seat belt crosses the user's body is substantially the same regardless of the position of the seat but leads to considerable difficulties in cars with only two doors. On two-door cars the rear or squab of the front seats must be tilted forward and the seats slide forward to the maximum extent to permit access to the rear seats. However, when one of the outboard seat belt mountings moves with the seat it will be appreciated that when the seat is moved forwardly to permit access to the rear seats the belt inevitably extends across the space through which a person gaining access to the rear seats must pass and is thus very inconvenient and might be dangerous in the event of it being necessary for a person in the rear of the car needing to leave the car in an emergency.

EP-A-41859 discloses a vehicle seat belt connection device comprising the features defined in the preamble of claim 1 in the form of a bar having a front securement portion connected to the vehicle body and an elongate portion extending rearwardly from the securement portion to a free end. A peg is attached to the bar at or adjacent the securement portion and fits in an aperture in the vehicle body thereby preventing movement in a vertical plane.

It is also known to provide a bar, which extends in the longitudinal direction of the vehicle and having ends which are connected to the body of the vehicle, as the lower outboard seat belt mounting points. The seat belt is connected to this bar so as to be slidable along it. This form of mounting partially compensates for longitudinal movement of the seat by also permitting the seat belt mounting point to move longitudinally and further partially compensates for the obstructive effect of the seat belt as the front seat is tilted and slid forward in that the seat belt can be manually slid rearwardly on the mounting bar. However, it is not practicable for the bar to extend forward as far as the seat may be moved and it is very inconvenient to have to slide the seat belt rearwardly by hand each time access to or exit from the rear seats is required. Furthermore, this construction necessitates the provision of two longitudinally spaced load bearing connections to the vehicle body, one at each end of the bar.

Accordingly it is an object of the present invention to provide a vehicle seat belt mounting which includes a mounting point which moves with the associated seat but which does not constitute an obstruction when the seat is moved fully forwards.

In accordance with the present invention there is provided a vehicle with a first seat adjacent to which is a doorway and a second seat behind the first seat, the first seat being longitudinally slidably mounted on a pair of seat slide mechanisms, each of which mechanisms comprises a fixed elongate slide secured to the vehicle floor and a movable elongate slide which is carried by the fixed slide to be longitudinally movable with respect thereto, an elongate guide member having a front portion and a rear portion extending rearwardly of the front portion and a seat belt which is connected at one end to the vehicle body rearwardly of the doorway and at the other end to the guide member so as to be longitudinally slidable with respect thereto, characterised in that the guide member is connected to the movable slide of the slide mechanism closer to the doorway and that restraining means is connected to the vehicle body rearwardly of the doorway and co-operates with the rear portion to prevent lateral and vertical movement thereof.

Since the seat is movable the distance between the position of the point of connection of the guide member to the movable slide and the restraining means increases or decreases. If the rear end of the rear portion is fixed in position by the restraining means this may be accommodated by providing the guide member in telescopic form. However, it is preferred that the guide member is a single bar and that the restraining means comprises a simple bush or sleeve connected to the vehicle body and through which the guide bar can slide as the seat moves. As mentioned above, substantially none of the force exerted by the seat belt acts on the bush which can thus be of very light construction.

The guide bar thus extends rearwardly adjacent the bottom of the door opening or sill and it is preferred that it is concealed behind the sill. For this purpose it may be cranked since the point of connection with the movable slide will generally be above the level of the sill.

In order to ensure that the seat belt, which conveniently has an eye through which the guide bar passes, exerts a force on the bar which is at right angles to its length at the area over which it engages it, the guide bar is preferably downwardly arcuate at its front end portion, when viewed from the side. The front end of the guide bar is conveniently anchored to the movable slide at the anchoring point which is in any event commonly provided for the direct attachment of a seat belt. To ensure that the seat belt does not engage the seat adjacent its anchoring point on the guide bar, the arcuate position of the guide bar is conveniently spaced apart from the movable slide. Conveniently, the front end portion of the guide bar is bent into substantially semi-circular shape, the semi-circle lying in a plane which is at between 30° and 60° to the horizontal.

When the seat belt is in use, the eye engages the arcuate portion of the guide bar and is thus always in the optimum position, regardless of the longitudinal position of the seat. If the seat is moved fully forwards, e.g. to permit access to a rear seat, the seat belt may be slid rearwardly along the guide bar to a position rearward of the rear edge of the door opening so that the access is not obstructed. This may be effected manually but it is particularly preferred that automatic retraction means are provided. These may exert a constant rearward force on the seat belt which may easily be overcome by the user but which automatically retracts the seat belt to the rear of the doorway when it is not in use. The retraction means preferably constitutes a spring loaded pulley or the like of known type carrying a cord which is connected to the seat belt eye.

Further features and details of the invention will be apparent from the following description of one specific embodiment which is given by way of example with reference to the accompanying drawings, in which:
- Figure 1: is a highly diagrammatic scrap side elevation of a two-door car with a seat belt mounting in accordance with a first embodiment of the present invention when in use;
- Figure 2: is a view similar to Figure 1 showing the seat belt not in use with the seat tilted forward and slid to its forwardmost position;
- Figure 3: is a scrap front view of one seat slide mechanism and the associated guide bar of a seat belt mounting in accordance with a second embodiment of the present invention;
- Figure 4: is a view similar to Figure 1 but showing the seat belt mounting in accordance with the second embodiment; and
- Figure 5: is a view similar to Figure 2 but showing the seat belt mounting in accordance with the second embodiment.

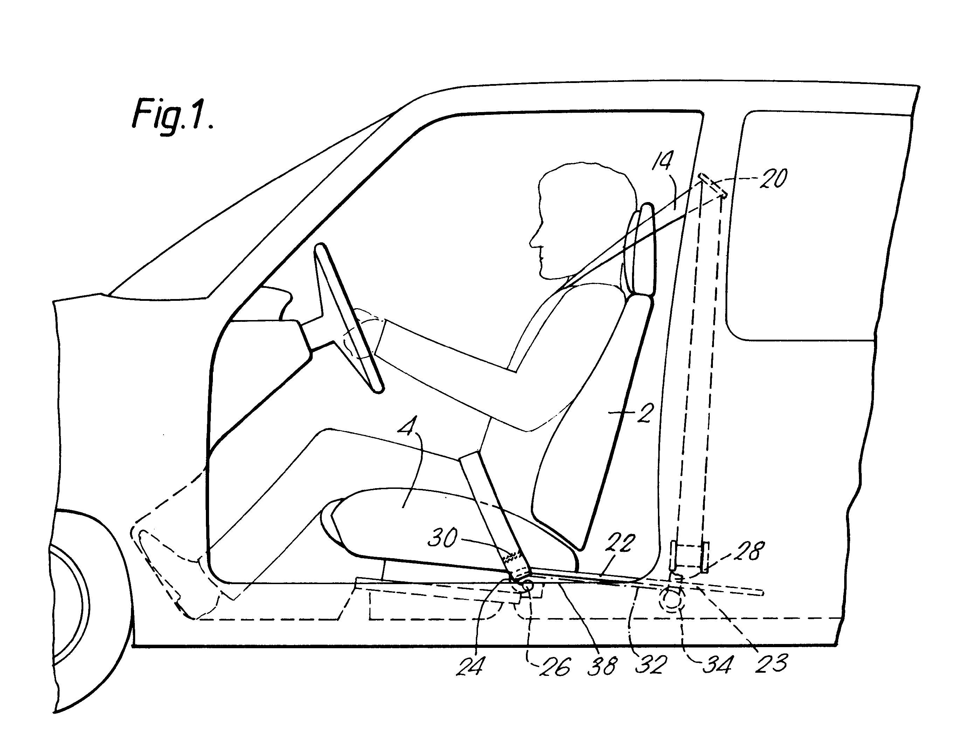

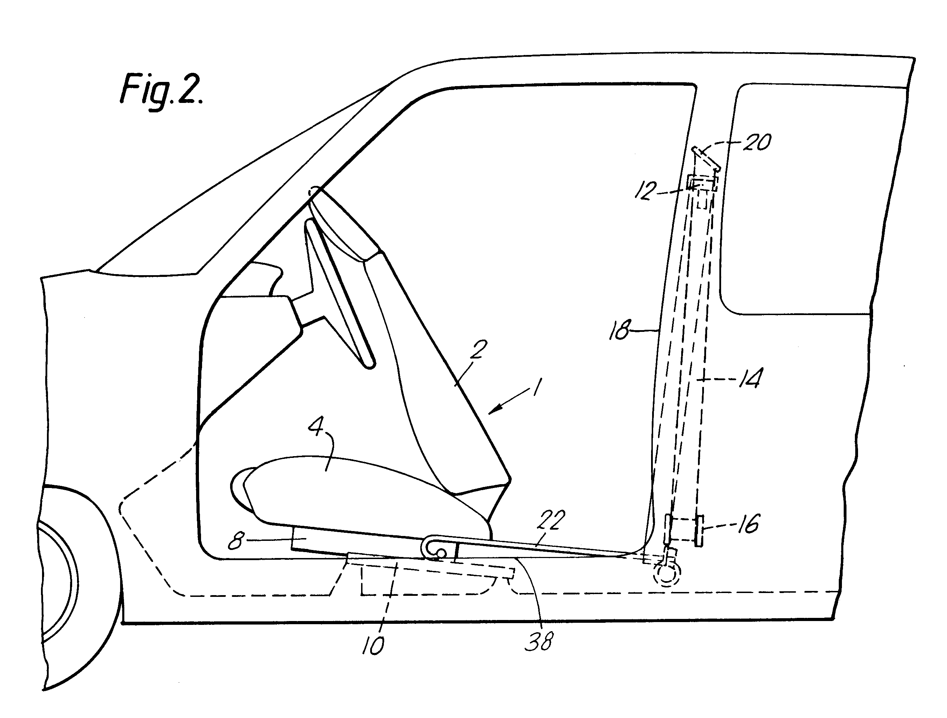

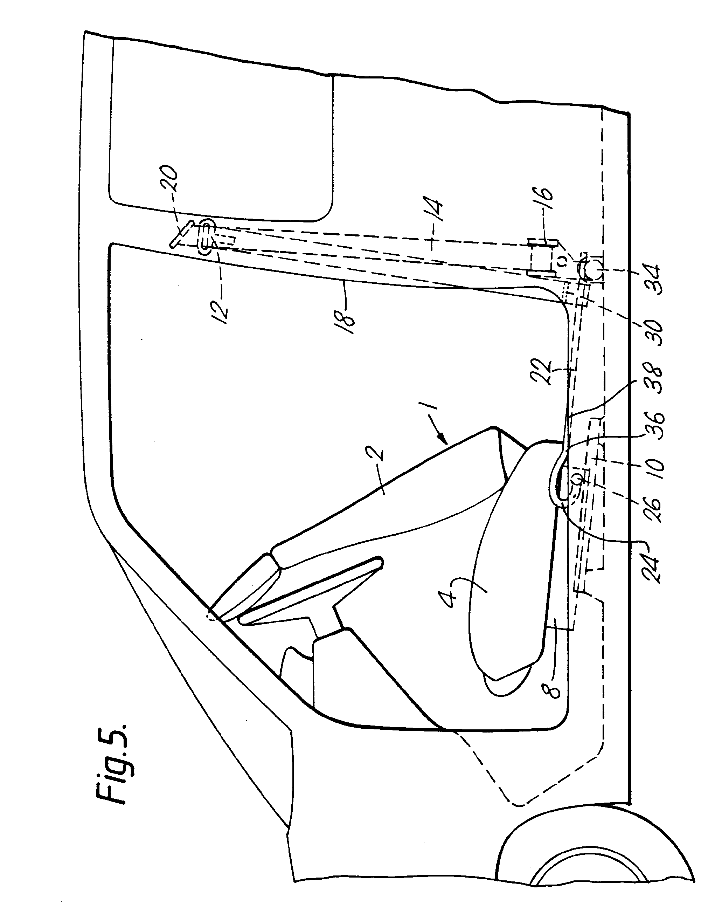

The vehicle shown in Figures 1 and 2 or Figures 3, 4 and 5 is a two-door car with two front seats and rear seats to which access may be gained by tilting the backs or squabs of the front seats forward and moving the seats forwardly into the position shown in Figure 2 or 5. The construction of each front seat and of the associated seat belt system is substantially the same and thus only one front seat will be described.

The seat 1 includes a back or squab 2 which may be tilted between the two positions shown in Figures 1 and 2 or Figures 4 and 5 and a base 4 which includes frame 6 which is connected to the movable slide 8 of two parallel, spaced seat slide mechanisms. Each seat slide mechanism comprises not only a movable slide 8 but also a fixed slide 10 which is secured to the floor of the car. The seat slide mechanisms may be of any known type and are thus not described in detail.

Associated with the seat 1 is a seat belt system which includes a buckle or locking receptacle (not shown) secured to the floor of the car between the two front seats. On the outboard side of the car there is a male locking member 12 for insertion and locking in the female member. The male member is retained in a loop of webbing belt 14 of which one end is stored on a spring loaded pulley or recoil system 16 which is secured on or within the rear pillar 18 of the doorway adjacent the seat. The webbing belt 14 is anchored or mounted to the car body at mounting point 20 at the upper portion of the pillar 18.

Connected to the outer surface of the movable slide 8 of the outboard slide mechanism is a guide bar 22 which extends rearwardly and generally has the shape of an umbrella handle. Thus the guide bar has a generally straight, rearwardly extending portion 23 and at its front end has an arcuate, preferably semi-circular portion 24 whose free end is connected by a bolt 26 to the movable slide 8. The arcuate portion 24 extends in a plane which extends at about 45° to the horizontal. The rear portion 23 of the guide bar 22 passes through and is slidably received in a simple plastic bush or sleeve 28 secured to the pillar 18. The sleeve 28 is of relatively flimsy construction and restrains the guide bar against lateral or horizontal movement whilst permitting longitudinal movement and, in use, is not subjected to any significant load. The free end of the loop in the webbing belt 14 is stitched at 30 to form an eye 40 through which the guide bar 22 passes. Connected to the lower portion of the eye is one end of a cord 32 whose other end is received on a spring loaded pulley or recoil mechanism 34 which is secured to the pillar 18 and is of a type similar to the recoil mechanism 16 for the webbing belt 14. The recoil mechanism 34 thus exerts a continuous light rearward force on the eye 40.

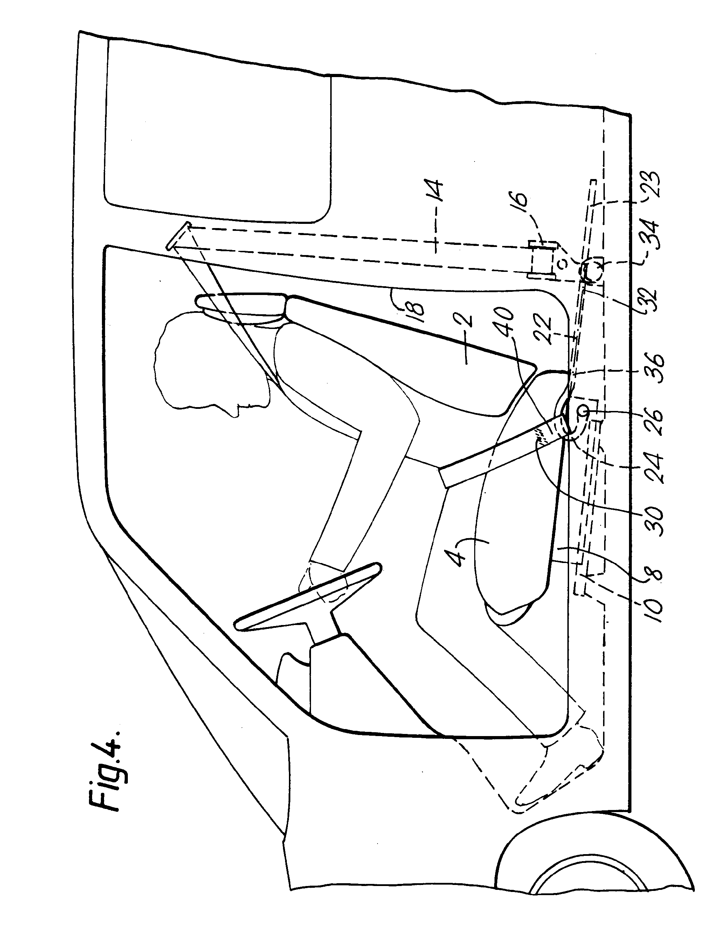

When the seat belt is in use, that is to say when it is in the configuration shown in Figures 1 or 4, the male and female members are latched together and the eye 40 is in engagement with the arcuate portion 24 of the guide bar 22. Due to the angle at which the arcuate portion is set it engages the eye over its entire width. When the seat belt is not in use the rearward tension exerted by the recoil mechanism 34 via the cord 32 draws the eye and therefore that portion of the seat belt webbing which extends from the eye to the upper mounting point 20 rearwardly so that it extends behind pillar 18, as shown in Figures 2 or 5. Thus when the seat is tilted foward and moved to its forwardmost position to allow access to the rear seats that access is not obstructed by the seat belt.

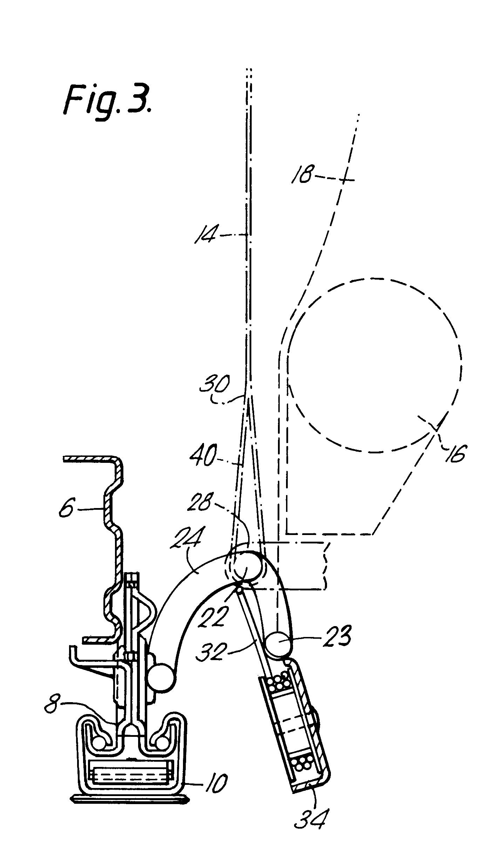

In the first embodiment illustrated in Figures 1 and 2 the guide bar 22 is shown as being substantially straight rearwardly of the arcuate portion 24 and visible above the sill 38. In practice, it is often desirable for the guide bar to be positioned as unobtrusively as possible and for this purpose it may be necessary or desirable to crank or otherwise shape the guide bar so that over the majority of its length it is below the level of the sill 38 and thus does not even partially obstruct the doorway. Thus, in the second embodiment, illustrated in Figures 3, 4 and 5, the guide bar 22 has a configuration whereby the front end of the straight portion adjacent the arcuate portion 24 is cranked as shown at 36 in the drawings.

## Claims

1. A vehicle with a first seat (1) adjacent to which is a doorway and a second seat behind the first seat (1), the first seat (1) being longitudinally slidably mounted on a pair of seat slide mechanisms, each of which mechanisms comprises a fixed elongate slide (10) secured to the vehicle floor and a movable elongate slide (8) which is carried by the fixed slide (10) to be longitudinally movable with respect thereto, an elongate guide member (22) having a front portion (24) and a rear portion (23) extending rearwardly of the front portion (24) and a seat belt (14) which is connected at one end to the vehicle body rearwardly of the doorway and at the other end to the guide member (22) so as to be longitudinally slidable with respect thereto, characterised in that the guide member (22) is connected to the movable slide (8) of the slide mechanism close to the doorway and that restraining means (28) is connected to the vehicle body rearwardly of the doorway and co-operates with the rear portion (23) to prevent lateral and vertical movement thereof.

2. A vehicle according to Claim 1 characterised in that the restraining means (28) is connected to the rear pillar (18) of the doorway.

3. A vehicle according to Claim 1 or Claim 2 characterised in that the rear end of the rear portion (23) is fixed in position by the restraining means (28) and the guide member (22) is telescopic allowing the distance between the position of the point of connection (26) of the guide member (22) to the movable slide (8) and the restraining means (28) to increase or decrease as the seat (12) moves.

4. A vehicle according to Claim 1 or Claim 2 characterised in that the guide member (22) comprises a bar and the restraining means (28) comprises a bush or sleeve connected to the vehicle body and through which the bar is capable of sliding as the seat moves.

5. A vehicle according to any one of Claims 1 to 4, characterised in that the front portion (24) is arcuate and the rear portion (23) is straight.

6. A vehicle according to Claim 5 characterised in that said other end of the seat belt (14) is formed with an eye (40) through which the guide member (22) passes, the eye (40) being retained at the front portion (24) when the belt (14) is in use being worn by a passenger, but being movable rearwardly along the guide member (22) when the belt (14) is not in use.

7. A vehicle according to Claim 6 characterised in that automatic retraction means (32, 34) is provided to cause the eye (40) to be moved rearwardly along the guide member (22) when the belt (14) is not in use.

8. A vehicle according to any one of claims 1 to 7 characterised in that the major part of the guide member (22) is positioned below the level of the sill (38) of the doorway.

9. A vehicle according to any one of Claims 1 to 8 characterised in that the front portion (24) has a free end, which end is connected to the movable slide (8).

## Patentansprüche

1. Fahrzeug mit einem ersten Sitz (1), zu dem benachbart ein Türeingang vorgesehen ist, und einem zweiten Sitz hinter dem ersten Sitz (1), wobei der erste Sitz (1) in Längsrichtung verschiebbar auf einem Paar Sitzgleitmechanismen befestigt ist, wobei jeder der Mechanismen umfaßt einen feststehenden, länglichen, an dem Fahrzeugboden befestigten Schlitten (10) und einen beweglichen, länglichen Schlitten (8), der von dem feststehenden Schlitten (10) getragen ist und bezüglich diesem in Längsrichtung beweglich ist, ein längliches Führungselement (22) mit einem Vorderteil (24) und einem von dem Vorderteil (24) sich nach hinten erstreckenden Rückteil (23), und einem Sitzgurt (14), der an einem Ende hinter dem Türeingang mit dem Fahrzeugkörper und am anderen Ende mit dem Führungselement (22) verbunden ist, so daß er in Längsrichtung bezüglich diesem verschiebbar ist,
dadurch **gekennzeichnet,**
daß das Führungselement (22) nahe dem Türeingang mit dem beweglichen Schlitten (8) des Gleitmechanismus' verbunden ist, und daß ein Rückhaltemittel (28) hinter dem Türeingang mit dem Fahrzeugkörper verbunden ist und mit dem Rückteil (23) zusammenarbeitet, um seitliche und vertikale Bewegungen des Rückteiles zu vermeiden.

2. Fahrzeug nach Anspruch 1,
dadurch **gekennzeichnet**,
daß das Rückhaltemittel (28) mit dem hinteren Holm (18) des Türeinganges verbunden ist.

3. Fahrzeug nach Anspruch 1 oder Anspruch 2,
dadurch **gekennzeichnet,**
daß das hintere Ende des Rückteils (23) durch das Rückhaltemittel (28) in seiner Position festgelegt ist, und daß das Führungselement (22) teleskopartig ermöglicht, den Abstand zwischen der Position des Verbindungspunktes (26) zwischen dem Führungselement (22) mit dem beweglichen Schlitten (8) und dem Rückhaltemittel (28) bei Bewegung des Sitzes (12) zu verkleinern oder zu vergrößern.

4. Fahrzeug nach Anspruch 1 oder 2,
dadurch **gekennzeichnet,**
daß das Führungselement (22) eine Stange umfaßt und daß das Rückhaltemittel (28) eine mit dem Fahrzeugkörper verbundene Buchse oder Hülse umfaßt, die es der Stange ermöglicht, bei einer Bewegung des Sitzes zu gleiten.

5. Fahrzeug nach irgendeinem der Ansprüche 1 bis 4,
dadurch **gekennzeichnet**,
daß das Vorderteil (24) gewölbt ist und das Rückteil (23) gerade ist.

6. Fahrzeug nach Anspruch 5,
dadurch **gekennzeichnet**,
daß das andere Ende des Sitzgurtes (14) mit einem Auge (40) ausgebildet ist, durch das das Führungselement (22) hindurchläuft, wobei das Auge (40) an dem Vorderteil (24) zurückgehalten wird, wenn der Gurt (14) im Gebrauch von einem Passagier angelegt wird, jedoch entlang dem Führungselement (22) nach hinten beweglich ist, wenn der Gurt (14) nicht in Gebrauch ist.

7. Fahrzeug nach Anspruch 6,
dadurch **gekennzeichnet**,
daß ein automatisches Rückzugsmittel (32, 34) vorgesehen ist, das bewirkt, daß das Auge (40) entlang dem Führungselement (22) nach hinten bewegt wird, wenn der Gurt (14) nicht in Gebrauch ist.

8. Fahrzeug nach irgendeinem der Ansprüche 1 bis 7,
dadurch **gekennzeichnet,**
daß das Hauptteil des Führungselementes (22) unterhalb der Höhe der Schwelle (38) des Türeinganges positioniert ist.

9. Fahrzeug nach irgendeinem der Ansprüche 1 bis 8,
dadurch **gekennzeichnet,**
daß das Vorderteil (24) ein freies Ende aufweist und dieses Ende mit dem beweglichen Schlitten (8) verbunden ist.

## Revendications

1. Un véhicule pourvu d'un premier siège (1), près duquel se trouve un encadrement de porte, et d'un deuxième siège situé derrière le premier siège (1), le premier siège étant monté à coulissement longitudinal sur une paire de mécanismes de coulissement de siège, chacun de ces mécanismes comprenant une glissière allongée fixe (10) fixée sur le plancher du véhicule et une glissière allongée mobile (8) qui est portée par la glissière fixe (10) afin d'être mobile longitudinalement par rapport à celle-ci, un élément allongé de guidage (22) comportant une partie avant (24) et une partie arrière (23) s'étendant en arrière de la partie avant (24) et une ceinture de sécurité (14) qui est reliée à une extrémité à la caisse du véhicule en arrière de l'encadrement de porte et, à l'autre extrémité, à l'élément de guidage (22) de façon à pouvoir coulisser longitudinalement par rapport à celui-ci, caractérisé en ce que l'élément de guidage (22) est relié à la glissière mobile (8) du mécanisme de glissière près de l'encadrement de porte et en ce qu'un moyen de retenue (28) est relié à la caisse du véhicule en arrière de l'encadrement de porte et coopère avec la partie arrière (23) pour empêcher un déplacement latéral ou vertical de celle-ci.

2. Un véhicule selon la revendication 1, caractérisé en ce que le moyen de retenue (28) est relié au pilier arrière (18) de l'encadrement de porte.

3. Un véhicule selon la revendication 1 ou la revendication 2, caractérisé en ce que l'extrémité arrière de la partie arrière (23) est fixée en position par le moyen de retenue (28), et l'élément de guidage (22) est télescopique en permettant à la distance entre la position du point de liaison (26) de l'élément de guidage (22) sur la glissière mobile (8) et l'élément de retenue (28) d'augmenter ou de diminuer lorsque le siège (12) est déplacé.

4. Un véhicule selon la revendication 1 ou la revendication 2, caractérisé en ce que l'élément de guidage (22) comprend une barre et l'élément de retenue (28) comprend une douille, ou un manchon, relié à la caisse du véhicule et à travers lequel la barre peut coulisser lorsque le siège est déplacé.

5. Un véhicule selon l'une quelconque des revendications 1 à 4, caractérisé en ce que la partie avant (24) est incurvée et la partie arrière (23) est droite.

6. Un véhicule selon la revendication 5, caractérisé en ce que ladite autre extrémité de la ceinture de sécurité (14) comprend un oeillet (40) à travers lequel passe l'élément de guidage (22), l'oeillet (40) étant retenu à la partie avant (24), lorsque la ceinture (14) est utilisée en étant portée par un passager, mais étant mobile vers l'arrière le long de l'élément de guidage (22) lorsque la ceinture (14) n'est pas utilisée.

7. Un véhicule selon la revendication 6 caractérisé en ce qu'un moyen automatique de retrait (32, 34) est prévu de manière à amener l'oeillet (40) à être déplacé vers l'arrière le long de l'élément de guidage (22) lorsque la ceinture (14) n'est pas utilisée.

8. Un véhicule selon l'une quelconque des revendications 1 à 7, caractérisé en ce que la majeure partie de l'élément de guidage (22) est positionnée au-dessous du niveau du seuil (38) de l'encadrement de porte.

9. Un véhicule selon l'une quelconque des revendications 1 à 8 caractérisé en ce que la partie avant comprend une extrémité libre qui est reliée à la glissière mobile (8).
